# EUROPEAN PATENT APPLICATION

(11) **EP 0 676 576 A2**
(43) Date of publication of application: **11.10.1995**
(21) Application number: 95301766.2
(22) Date of filing: 16.03.1995
(51) Int. Cl.: F16L 25/00, F16L 33/207, H01R 4/64

(54) **An electrical ground for a flexible hose and method of making**

(30) Priority: 25.03.1994 US 217724
(71) Applicant: ILLINOIS TOOL WORKS INC., Glenview, Illinois 60025-5811 (US)
(72) Inventor: Scott, Gregory A., Christiana, Tennessee (US)
(74) Representative: Rackham, Stephen Neil

(57) **Abstract**

An electrical (28) ground for a flexible hose (10) and method of manufacturing it includes providing a flexible hose (10) preferably having an outer shell (12) formed from an electrically conductive material. A metal ring (26) first is inserted over the end of the hose (10) and a fitting (18) is swaged onto the hose end by compression of a metal fitting collar (20) about the hose end and a portion of the fitting (24a) positioned within the interior of the hose (10). The ring (26) is moved back over the collar (20) and a bare end (30) of a ground wire (28) is inserted between the collar (20) and the ring (26). The ring (26) is then crimped about the collar (20) capturing the end (30) of the ground wire (28) there-between.

## Description

The present invention relates generally to flexible hoses, and more particularly to an electrical ground for a flexible hose and a method of manufacturing the hose where the hose includes an independent ground wire substantially permanently secured to the hose for electrically grounding the flexible hose as well as any fittings or couplings associated with the hose.

Flexible hoses formed from a conductive material, such as braided stainless steel, are desired for their strength and typically are utilized as conduits to protect and carry viscous materials, sensors, wires or pneumatic tubing between two or more points. In order to reduce the risk of electric shock, electrical grounding of such hoses is desired.

Existing flexible hoses of conductive material typically are grounded by physically connecting one end of the hose to a grounded member, such as a machine tool, an adhesive spray head or similar apparatus. These hoses, however, are not grounded prior to attaching the hose to the grounded member which presents a risk of electric shock during assembly and cleaning of the hoses.

This especially is true of hoses which carry hot-melt adhesives which frequently include a heater member along their lengths. Such hoses frequently are removed for cleaning or changing of the adhesive and need to be permanently grounded to reduce the risk of electric shock.

It therefore would be desirable to provide a substantially permanent ground wire for a flexible hose that preferably is formed from conductive material, such as braided stainless steel, where the ground wire is secured to the hose for providing continuous grounding of the hose, fittings and couplings during assembly and disassembly of the hose, electrically and hydraulically, from its respective connections.

According to a first aspect of this invention, a method of providing an electrical ground for a flexible hose comprises the steps of:
a) providing a flexible hose;
b) inserting a metal ring having a predetermined diameter over an end of said hose and positioning said ring along said hose at a desired position;
c) swaging a fitting onto the hose end by compression of a metal fitting collar about the hose end and a portion of said fitting;
d) moving said ring back toward the hose end and into engagement about said collar;
e) inserting a bare end of a ground wire between the ring and the collar; and
f) crimping the ring about the collar to capture the end of the ground wire there-between.

According to a second aspect of this invention an electrically grounded flexible hose, comprises:
a flexible hose;
a fitting swaged onto the hose end by a fitting collar positioned about the hose and compressed about the hose and a portion of the fitting;
a ground wire including a first bare end thereof positioned against a portion of said collar and a second end thereof in operable communication with a ground; and
a metal ring positioned and crimped about the exterior of said collar with said first bare end of said ground wire captured between said collar and said ring.

A particular example of a method and apparatus in accordance with this invention will now be described with reference to the accompanying drawings, in which:-
FIG. 1 is a perspective view of a portion of a flexible conductive hose having a fitting secured to one end thereof with a ground wire secured thereto;
FIG. 2 is an enlarged partial cross sectional view of the hose fitting, collar, ring and ground wire taken along line 2-2 of FIG. 1;
FIG. 3 is an exploded perspective view of the hose, fitting and ground wire; and,
FIG. 4 is a schematic view illustrating the method of securing the ground wire to the hose.

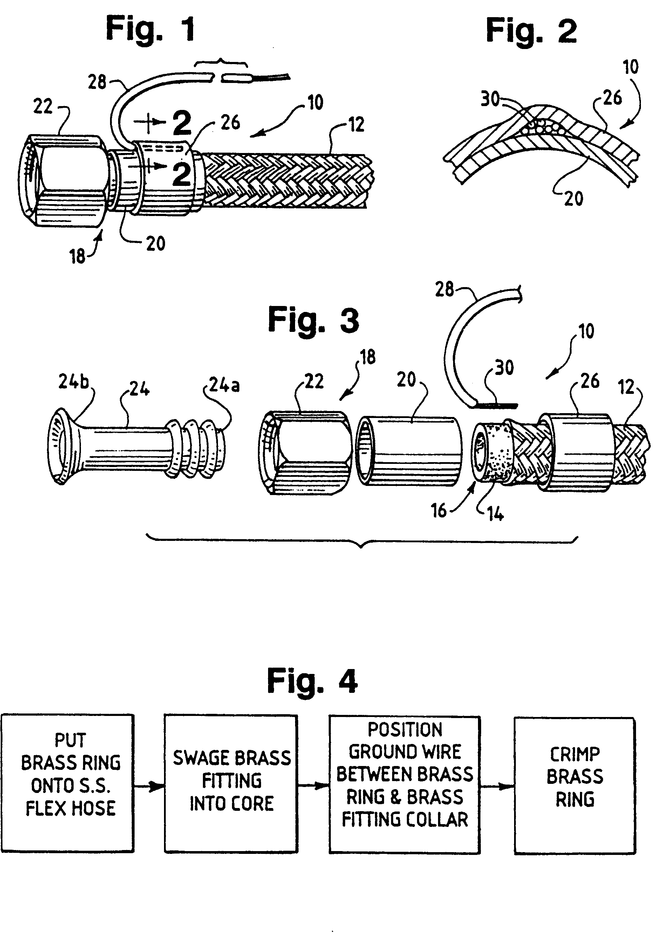

Referring to FIG. 3, a flexible hose of the invention is designated generally by the reference numeral 10. The hose 10 preferably includes an outer electrically conductive sleeve 12 and an inner core 14 where the sleeve 12 preferably is formed from braided strands of metal, such as stainless steel or the like. It is to be understood, however, that the hose 10 can be formed from any material.

In order to connect an end 16 of the hose 10 to another article, a fitting 18 is included which preferably is made of brass. The fitting 18 includes a fitting collar 20, a nut 22 and a fitting member 24 having a first male engagement portion 24a and a second flanged portion 24b.

To secure the fitting 18 to the end 16 of the hose 10, the collar 20 is first inserted over the end 16 of the hose 10 then the male engagement portion 24a is inserted through nut 22 and within an interior of the core 14. With the nut about the male engagement portion 24b, the fitting member 24 and the collar 20 is swaged or compressed about the end 16 of the hose 10 and the male engagement portion 24a to secure the fitting 18 thereto.

In order to electrically ground the hose 10, the present invention provides a ring 26 and ground wire 28. The ring 26 preferably is made of metal, such as brass.

To secure the wire 28 to the hose 10, the ring 26 is inserted over the end 16 of the hose 10 before the fitting 18 is swaged onto the hose 10. After the fitting 18 is swaged onto the end 16 of the hose 10 as described above, the ring 26 is pulled back over the fitting collar 20. A bare end 30 of the wire 28 then is inserted between the ring 26 and the fitting collar 20 and the ring 26 is crimped about the collar 20 securing the wire 28 therebetween.

It is to be noted that the fitting collar 20 and ring 26 preferably are formed from the same material in order to provide the same coefficient of expansion, particularly if the hose 10 is utilized to transport hot material, such as a hot-melt adhesive. In such applications, the hose 10 can include some type of heating member (not illustrated) along its length or a portion thereof to maintain a desired temperature of the adhesive.

Although the preferred material for the ring 26 and collar 20 is brass, the invention is not to be limited to the type of material utilized.

## Claims

1. A method of providing an electrical ground for a flexible hose comprising the steps of:
a) providing a flexible hose (10);
b) inserting a metal ring (26) having a predetermined diameter over an end of said hose (10) and positioning said ring along said hose at a desired position;
c) swaging a fitting (18) onto the hose (10) end by compression of a metal fitting collar (20) about the hose end and a portion of said fitting (18);
d) moving said ring (26) back toward the hose end and into engagement about said collar (20);
e) inserting a bare end (30) of a ground wire (28) between the ring (26) and the collar (20); and
f) crimping the ring (26) about the collar (20) to capture the end (30) of the ground wire (28) there-between.

2. The method as defined in claim 1, wherein said swaging of step c) includes inserting said collar (20) and a nut (18) in succession onto the end of said hose (10), inserting a male engagement portion (24) of the fitting through the nut (18) and within an interior of said hose (10) with a flange portion (24b) of the fitting (18) protruding therefrom, moving said nut (18) onto said flange portion (24b), moving said collar (20) into position on the exterior of said hose (10) overlying said male engagement portion (24a) of said fitting within said hose (10) and swaging said collar (20) about said hose (10) and said male engagement portion (24a) to capture the hose (10) between the collar (20) and the male engagement portion (24a) and connect the fitting (18) to the hose end.

3. The method as defined in claim 1 or 2, wherein step a) includes providing a flexible hose (10) at least having an outer shell (12) formed from an electrically conductive material.

4. An electrically grounded flexible hose, comprising:
a flexible hose (10);
a fitting (18) swaged onto the hose end by a fitting collar (20) positioned about the hose (10) and compressed about the hose (10) and a portion of the fitting (18);
a ground wire (28) including a first bare end (30) thereof positioned against a portion of said collar (20) and a second end thereof in operable communication with a ground; and
a metal ring (26) positioned and crimped about the exterior of said collar (20) with said first bare end (30) of said ground wire (28) captured between said collar (20) and said ring (26).

5. A hose as defined in claim 4, wherein said hose (10) at least includes an outer shell (12) formed from an electrically conductive material.

6. A hose as defined in claim 4 or 5, wherein said hose (10) includes an electrical heater member along its length.
